(19) Europäisches Patentamt

European Patent Office

Office européen des brevets

(11) Veröffentlichungsnummer: **0 176 839**
**A1**

# (12) EUROPÄISCHE PATENTANMELDUNG

(21) Anmeldenummer: 85111622.8

(22) Anmeldetag: 13.09.85

(51) Int. Cl.⁴: **H02K 23/04** , H02K 5/06 , H02K 5/08 , H02K 7/116

(30) Priorität: 27.09.84 DE 3435533

(43) Veröffentlichungstag der Anmeldung:
09.04.86 Patentblatt 86/15

(84) Benannte Vertragsstaaten:
DE FR GB IT SE

(71) Anmelder: **Siemens Aktiengesellschaft**
**Berlin und München Wittelsbacherplatz 2**
**D-8000 München 2(DE)**

(72) Erfinder: **Adam, Peter**
**Allerseeweg 25**
**D-8706 Höchberg(DE)**
Erfinder: **Knappe, Wolfram, Dipl.-Ing. (FH)**
**Talstrasse 45**
**D-8710 Kitzingen(DE)**

(54) **Dauermagneterregter Kleinmotor.**

(57) Es soll ein mit geringem Aufwand herstellbarer und ein möglichst geringes Gewicht aufweisender dauermagneterregter Kleinmotor geschaffen werden; dazu wird erfindungsgemäß vorgeschlagen, ein ausschließlich nach den Erfordernissen des magnetischen Rückschlusses dimensioniertes und angeordnetes Stahlringteil (3) in ein unmagnetisches, vorzugsweise als Kunststoff-Spritzgußteil hergestelltes, gegossenes Motorgehäuse (2) einzuspritzen; an das Motorgehäuse (2) sind Befestigungslaschen, insbesondere Befestigungsflansche (21) zur Halterung des Getriebes (1) eines Kraftfahrzeug-Fensterheberantriebes, mitangegossen.

Eine Anwendung eignet sich insbesondere für elektrische Kraftfahrzeug-Hilfsantriebe.

FIG 1

FIG 2

EP 0 176 839 A1

Die Erfindung bezieht sich auf einen dauermagneterregten Kleinmotor mit am Umfang des Motorgehäuses angeordneten Schalenmagneten und magnetischem Ständer-Rückschlußteil; ein derartiger Kleinmotor ist aus dem deutschen Gebrauchsmuster 8128186 bekannt.

Bei dem bekannten, als Antrieb für einen Kraftfahrzeug-Fensterheber verwendeten und an ein Stirnrad-Getriebe angeflanschten dauermagneterregten Kommutator-Motor besteht das gesamte, sowohl den Rotorals auch den Kommutator umfassende Gehäuse aus Stahlblech, das gleichzeitig auch dem magnetischen Rückschluß für den von den im Stahlblech-Rotorgehäuse gehaltenen Dauermagneten erzeugten Magnetfluß dient. Zur mechanischen Verbindung des Stahlblech-Motorgehäuses mit einem angeflanschten, ein Schneckengetriebe aufnehmenden Getriebegehäuse sind gesonderte Blechlaschen vorgesehen, die bei dem Zusammenbau von Kommutatormotor und Getriebe mit ihrem einen Ende in Schlitze des Stahlblech-Motorgehäuses eingesteckt und mit ihren anderen, radial aus den Schlitzen herausragenden Enden im Getriebegehäuse verschraubt werden.

Gemäß Aufgabe vorliegender Erfindung soll ein mit geringem Aufwand herstellbarer und ein möglichst geringes Gewicht aufweisender dauermagneterregter Kleinmotor, insbesondere zur Anwendung für Kraftfahrzeug-Hilfsantriebe, geschaffen werden.

Die gestellte Aufgabe ist bei einem dauermagneterregten Kleinmotor der eingangs genannten Art erfindungsgemäß durch die Lehre des Anspruchs 1 möglich; vorteilhafte Ausgestaltungen der Erfindung sind jeweils Gegenstand der Unteransprüche.

Die erfindungsgemäße Konstruktion eines dauermagneterregten Kleinmotors ermöglicht es, das durch den Stahlblechanteil maßgeblich bestimmte Statorgewicht auf das unbedingt notwendige Maß zu beschränken und durch das Mitanspritzen von Halterungs- und Befestigungsteilen an das eigentliche Motorgehäuse die notwendigen Handhabungsschritte bei der Herstellung und insbesondere bei der Montage des Motors zu mindern. Eine besonders leichte Ausführung eines erfindungsgemäßen dauermagneterregten Kleinmotors ergibt sich dadurch, daß das Motorgehäuse als Kunststoff-Spritzgußteil ausgeführt wird, wobei gleichzeitig eine hinreichende elektrische Isolierung gewährleistet werden kann, falls das Gehäuse z.B. auch direkt Anschlußmittel zwischen einer äußeren elektrischen Anschlußleitung und den Bürstenlitzen des Kommutators aufnehmen soll.

Die Erfindung sowie weitere vorteilhafte Ausgestaltungen der Erfindung werden im folgenden anhand eines schematisch dargestellten Ausführungsbeispiels in der Zeichnung näher erläutert. Darin zeigen:

Fig. 1 in einem axialen Längs-Teilschnittbild einen Kraftfahrzeug-Fensterheberantrieb mit einem an ein Getriebegehäuse angeflanschten dauermagneterregten Kleinmotor,

Fig. 2 einen Schnitt durch den dauermagneterregten Kleinmotor gemäß Schnittverlauf II-II in Fig.2.

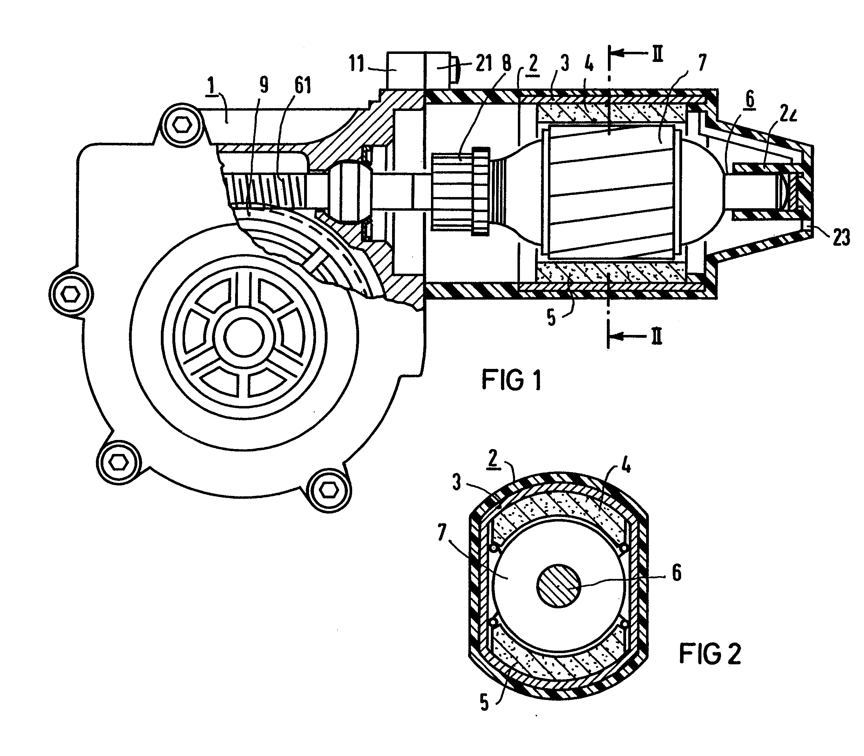

Fig.1 zeigt in einem axialen Längs-Teilschnittbild einen Kraftfahrzeug-Fensterheberantrieb mit einem nur schematisch angedeuteten, in einem Getriebegehäuse 1 angeordneten Schneckengetriebe und einem angeflanschten dauermagneterregten Kommutatormotor, dessen verlängerte Läuferwelle 6 als Schneckenantriebswelle 61 im Getriebegehäuse 1 eine mit der motorisch zu bewegenden Fensterscheibe in Wirkverbindung stehende Seilzugscheibe 9 antreibt.

Der dauermagneterregte Kleinmotor weist ein als Kunststoff-Spritzgußteil hergestelltes Gehäuse 2 auf. Im Bereich des Läuferblechpaketes 7 bzw. der schalenförmigen Permanentmagnete 4,5 ist in das als Kunststoff-Spritzgußteil hergestellte Motorgehäuse 2 ein dem Rückschluß des durch die Permanentmagnete 4,5 erzeugten Magnetfluß dienenden Stahlringteil 3 eingegossen. Dieser Stahlringteil 3 erstreckt sich - wie aus Fig.1 ersichtlich - lediglich über den vom Rotorblechpaket 7 bzw. den Permanentmagneten 4,5 beanspruchenden Motorraum, während der den Kommutator abdeckende Motorraum in Abweichung von der bekannten Bauweise lediglich von dem als Kunststoff-Spritzgußteil hergestellten Motorgehäuse 2 umschlossen ist.

In vorteilhafter Weise sind bei der Herstellung des Motorgehäuses 2 an dieses an seinem linken, getriebeseitigen Enden Befestigungsflansche 21 mitangegossen, über die der Kollektormotor an korrespondierende Befestigungsflansche 11 des Getriebegehäuses 1 angeschraubt werden kann. Nach einer weiteren Ausgestaltung der Erfindung ist in fertigungs- und montagetechnisch vorteilhafter Weise im Bereich der dem angeflanschten Getriebegehäuse 1 abgewandten Stirnseite des Motorgehäuses 2 ein Lagersitz 22 für die Lagerung der Läuferwelle 6 ebenfalls einstückig mitangespritzt. Bei dem Spritzen des Gehäuses 2 ist weiterhin in vorteilhafter Weise vorgesehen, die Gehäusewandung an verschiedenen Stellen mit Wasserabflußlöchern zu versehen, von denen in der Darstellung in Fig.1 ein stirnseitiges Wasserabflußloch 23 eingetragen ist, das bei senkrechtem Einbau des dargestellten Fensterheberantriebs mit nach unten gerichtetem Motor-Lagersitz 22 die Abflußmöglichkeit von gegebenenfalls in der Kraftfahrzeug-Tür sich ansammelndem und in den Fensterheber eindringenden Regen-oder Kondenswassers sicherstellt. Weitere im Sinne eines vorteilhaft universell bei verschiedenen Einbaulagen einsetzbaren Einheits-Spritzgußteils im Motorgehäuse 2 vorgesehene, bei dieser Einbaulage jedoch nicht für den Abfluß einsetzbare Wasserabflußlöcher können durch Verschlußstopfen abgedichtet sein, damit nicht in unerwünschter Weise durch diese Löcher von außen Feuchtigkeit eindringen kann.

## Ansprüche

1. Dauermagneterregter Kleinmotor mit am Umfang des Motorgehäuses angeordneten Schalenmagneten und magnetischem Ständer-Rückschlußteil, **dadurch gekennzeichnet,** daß ein ausschließlich nach den Erfordernissen des magnetischen Rückschlusses dimensioniertes und angeordnetes Stahlringteil (3) in ein unmagnetisches, als Spritzgußteil hergestelltes Motorgehäuse (2) eingespritzt ist.

2. Dauermagneterregter Kleinmotor nach Anspruch 1, **dadurch gekennzeichnet,** daß das als Spritzgußteil hergestellte Motorgehäuse (2) aus einer Aluminiumlegierung besteht.

3. Dauermagneterregter Kleinmotor nach Anspruch 1, **dadurch gekennzeichnet,** daß das als Spritzgußteil hergestellte Motorgehäuse (2) aus Kunststoff besteht.

4. Dauermagneterregter Kleinmotor nach einem der Ansprüche 1 - 3, **dadurch gekennzeichnet,** daß an das Motorgehäuse (2) gleichzeitig Motorbefestigungslaschen mitangespritzt sind.

5. Dauermagneterregter Kleinmotor für eine Motor-Antriebsanordnung mit einem an die eine axiale Stirnseite des Motorgehäuses angeflanschten Getriebe, insbesondere für einen Kraftfahrzeug-Fensterheberantrieb, nach einem der Ansprüche 1 - 4, **dadurch gekennzeichnet,** daß im Bereich der einen axialen Stirnseite am äußeren Umfang des Motorgehäuses (2) Befestigungsflansche (21) zur Halterung des Getriebes (1) mitangespritzt sind.

6. Dauermagneterregter Kleinmotor nach Anspruch 5, **dadurch gekennzeichnet,** daß im Bereich der anderen, dem angeflanschten Getriebe (1) abgewandten Stirnseite des Motorgehäuses (2) ein Lagersitz (22) für die Lagerung der Läuferwelle (6) mitangespritzt ist.

7. Dauermagneterregter Kleinmotor nach Anspruch 5 oder 6, **dadurch gekennzeichnet,** daß in das Motorgehäuse (2) Wasserabflußlöcher (23) miteingespritzt sind.

FIG 1

FIG 2

0 176 839

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 055 493 (STERLING) <br> * Seite 1, Zeilen 18-26,33-40; Seite 2, Zeilen 1-12; Seite 3, Zeilen 31-40 * | 1-5 | H 02 K 23/04 <br> H 02 K 5/06 <br> H 02 K 5/08 <br> H 02 K 7/116 |
| | --- | | |
| X | FR-A-1 392 482 (SOFERIC) <br> * Seite 1, linke Spalte, Zeilen 9-12,35-39; Seite 1, rechte Spalte, Zeilen 9-11 * | 1,3,6 | |
| | --- | | |
| X | US-A-2 818 518 (E.A. PHANEUF et al.) <br> * Spalte 2, Zeilen 1-4,69-72; Spalte 3, Zeilen 50-53,63-69; Figuren 1,2 * | 1-4,6 | |
| | --- | | |
| X | FR-A-1 490 539 (R.E. GAGNAIRE et al.) <br> * Seite 1, linke Spalte, Zeilen 9-18; Figuren 14-17 * | 1,3 | RECHERCHIERTE SACHGEBIETE (Int. Cl.4) |
| | --- | | |
| A | FR-A-2 396 149 (SIEMENS) <br> * Seite 1, Zeilen 1-21 * | 1 | H 02 K |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 10-12-1985 | STEINMETZ L.J.P. |